# EUROPEAN PATENT APPLICATION

(11) **EP 3 581 268 A1**
(43) Date of publication of application: **18.12.2019**
(21) Application number: 18750786.8
(22) Date of filing: 09.02.2018
(51) Int. Cl.: B01J 23/63, B01D 53/94, B01J 35/04, B01J 37/02, B01J 37/04, B01J 37/08, F01N 3/10

(54) **EXHAUST GAS PURIFYING CATALYST COMPOSITION, METHOD FOR PRODUCING SAME AND EXHAUST GAS PURIFYING CATALYST FOR AUTOMOBILES**

(30) Priority: 13.02.2017 JP 2017024213
(71) Applicant: N.E. Chemcat Corporation, Tokyo 105-6124 (JP)
(72) Inventor: HARA, Hiroyuki, Tokyo 105-6124 (JP); NAKAYAMA, Hiroki, Tokyo 105-6124 (JP); NAGATA, Makoto, Tokyo 105-6124 (JP)
(74) Representative: TBK
(86) International application number: PCT/JP2018/004564
(87) International publication number: WO 2018/147408

(57) **Abstract**

There are provided an exhaust gas-purifying catalyst composition that can purify hydrocarbons, carbon monoxide, nitrogen oxides, and the like discharged from an internal combustion engine or the like, and can maintain excellent purification performance particularly under a wide range of conditions from low temperature to high temperature, and a method for producing the same, and an automobile exhaust gas-purifying catalyst. The present invention provides an exhaust gas-purifying catalyst composition for purifying carbon monoxide (CO), hydrocarbons (HC), nitrogen oxides (NOx), and the like in exhaust gas, comprising at least Rh; a complex oxide that is a particular Ce-containing component (A) and/or a particular Zr-containing component (B); and alumina, wherein Rh is supported on alumina together with the complex oxide, an amount of Rh supported is 0.01 to 5 wt% based on a total amount of Rh, the complex oxide, and alumina, and a content of the complex oxide is 0.1 to 30 wt% in total based on the total amount of Rh, the complex oxide, and alumina, and the like.

## Description

### Technical Field

The present invention relates to an exhaust gas-purifying catalyst composition and a method for producing the same, and an automobile exhaust gas-purifying catalyst, and more particularly to an exhaust gas-purifying catalyst composition that can purify hydrocarbons, carbon monoxide, nitrogen oxides, and the like discharged from an internal combustion engine or the like, and can maintain excellent purification performance particularly under a wide range of conditions from low temperature to high temperature, and a method for producing the same, and an automobile exhaust gas-purifying catalyst.

### Background Art

Harmful gases such as carbon monoxide (CO), hydrocarbons (HC), and nitrogen oxides (NOx) are discharged from the internal combustion engines of automobiles, and in order to purify these, various catalysts including platinum group metals are used.

As platinum group metals, platinum (Pt), palladium (Pd), and rhodium (Rh) are known, and in an exhaust gas-purifying catalyst for a gasoline car or the like, particularly in a ternary catalyst (TWC) that simultaneously purifies carbon monoxide (CO), hydrocarbons (HC), and nitrogen oxides (NOx), a catalytically active species excellent in oxidation activity, such as Pt or Pd, and Rh excellent in NOx purification activity are often used in combination. It is considered that in the purification of NOx by Rh, for example, a steam reforming reaction and a CO + NO reaction are involved in purification of NOx.

In addition, in an exhaust gas-purifying catalyst, cerium oxide having Oxygen Storage Capacity (OSC), an alkaline earth metal, a zirconium oxide, zeolite, and the like are used as catalytic components or promoter components in addition to platinum group metals, in order to promote further improvement of purification performance. Among these, cerium oxide stores oxygen in the form of CeO₂ when the oxygen concentration in exhaust gas is high, and turns into Ce₂O₃ to release oxygen when the oxygen concentration is low. The released oxygen is active oxygen and is used for the oxidation by Pt or Pd to promote the purification of CO and HC. The OSC component also serves the function of buffering a change in oxygen concentration in exhaust gas by the storage-release of oxygen. In a TWC, the exhaust gas purification performance improves by this function. A TWC is a single catalyst for performing oxidation and reduction. There is a range of exhaust gas components suitable for purification by a TWC, in terms of design, and this range often depends on the air-fuel ratio. Such a range is referred to as a window, and in many cases, exhaust gas that has burned in the theoretical air-fuel ratio referred to as Stoichio or a ratio close thereto is set as the window range. By buffering a change in oxygen concentration in exhaust gas, the window range is satisfied for a long time, and the purification of exhaust gas is more effectively performed. This is considered to be particularly due to the influence of Rh on the NOx purification characteristics.

In addition to pure cerium oxide, a complex oxide with zirconium is also often used as the material having OSC (see Patent Literature 1). A cerium-zirconium complex oxide is said to have high heat resistance and also have a fast oxygen storage-release rate. The reason for this is considered as follows: the crystal structure of the cerium-zirconium complex oxide is stable and does not inhibit the function of the cerium oxide, which is a main OSC component, and therefore OSC functions effectively even in the interior of the particles.

It is stated that a zirconium oxide promotes a steam reforming reaction and a CO + NO reaction when used together with a Rh component (see Patent Literature 2). The occurrence of such reactions in addition to a NOx purification reaction with HC further promotes the purification of NOx, and therefore a promoter for accelerating a steam reforming reaction, other than a zirconium oxide, is used.

In terms of improving the heat resistance of alumina, which is a matrix, and cerium oxide, which is an OSC component, addition of a rare earth oxide such as neodymium oxide or praseodymium oxide to alumina (see Patent Literature 3), and addition of a rare earth oxide such as lanthanum oxide or neodymium oxide to cerium oxide (see Patent Literature 4) are disclosed, and also a method is disclosed in which Rh, Pd, and the like, which are precious metals, is supported on both alumina particles whose heat resistance is improved with lanthanum oxide, zirconia, and the like, and cerium oxide fine particles whose heat resistance is improved with neodymium oxide, zirconia, and the like (see Patent Literature 5).

As a measure for effectively exhibiting catalytic performance, catalysts are placed on the exhaust gas upstream side and downstream side, or a plurality of catalyst layers are provided on a support surface, for example. These are measures for utilizing the properties of exhaust gas-purifying catalysts more effectively with the tightening of exhaust gas regulation. For example, for precious metals, Pt, Pd, and Rh, it is necessary to set optimum positions according to endurance (heat resistance, atmosphere resistance, and poison resistance), catalytic properties (oxidation activity and reduction activity), and other properties, and therefore Rh or Pt/Rh is placed in the surface layer, and Pd or Pd/Rh is placed in the lower layer.

In recent years, supporting Rh on a material having OSC has been performed. For example, known is an exhaust gas-purifying catalyst including a substrate and a catalyst layer containing Rh provided thereon, wherein Rh is supported on a support material obtained by supporting a Zr-based complex oxide on activated alumina (see Patent Literature 6). The catalyst layer includes a Zr-based complex oxide free of Ce as a bulking agent, and also includes a Zr-based complex oxide on which Rh is supported.

It is stated that the oxygen diffusivity on the matrix surface is better in a material having OSC and supporting Rh than in alumina supporting Rh, and that therefore the light-off activity of the former at the start of use is higher. On the other hand, the following problem is pointed out: the material having OSC, a matrix, has lower heat resistance than alumina, and therefore Rh is likely to sinter to result in a high deterioration rate. In other words, it is considered that when exposed to an exhaust gas at a high temperature, a material having OSC and supporting Rh is likely to suffer a decrease in NOx purification performance because Rh undergoes grain growth.

Under such circumstances, Nagashima et al. disclose a catalyst composition for exhaust gas purification comprising a catalyst composition in which rhodium (Rh) is supported on a zirconia (ZrO₂)-type base material together with α-alumina (Al₂O₃) particles, wherein the average particle size of the α-alumina particles is 10 nm to 1 µm and is smaller than the average particle size of the zirconia-type base material (see Patent Literature 7).

Thus, decreases in NOx, CO, and HC purification rates are suppressed. But, the regulation of exhaust gas only becomes increasingly strict. Therefore, there is a need for an exhaust gas-purifying catalyst HC, CO, and NOx purification performance of which is less likely to be influenced even if supported Rh is exposed to high temperature, in other words, an exhaust gas-purifying catalyst having both the high activity of a material having OSC and supporting Rh, and the endurance of alumina supporting Rh.

### Citation List

### Patent Literature

Patent Literature 1: Japanese Patent Publication No. 06-75675
Patent Literature 2: Re-publication of PCT International Publication No. 2000/027508
Patent Literature 3: Japanese Patent Laid-Open No. 61-38626
Patent Literature 4: Japanese Patent Laid-Open No. 64-4250
Patent Literature 5: Japanese Patent Laid-Open No. 2011-200817
Patent Literature 6: Japanese Patent Laid-Open No. 2013-237014
Patent Literature 7: Re-publication of PCT International Publication No. 2014/002667

### Summary of Invention

### Technical Problem

The present invention has been made in view of the above conventional problem. It is an object of the present invention to provide an exhaust gas-purifying catalyst composition that can purify hydrocarbons, carbon monoxide, nitrogen oxides, and the like discharged from an internal combustion engine or the like, and can maintain excellent performance particularly under a wide range of conditions from low temperature to high temperature, and a method for producing the same, an automobile exhaust gas-purifying catalyst, and the like.

### Solution to Problem

The present inventors have studied diligently over and over in order to solve the above conventional problem, and as a result found that by placing a complex oxide that is a particular Ce-containing component (A) and/or a particular Zr-containing component (B) on an alumina surface in a predetermined amount together with Rh, catalytic activity is relatively maintained, and a decrease in CO, HC, and NOx purification performance is suppressed, even if exposed to exhaust gas at high temperature for a long time. Thus, the present inventors have completed the present invention.

Specifically, according to a first invention, there is provided an exhaust gas-purifying catalyst composition for purifying carbon monoxide (CO), hydrocarbons (HC), and/or nitrogen oxides (NOx) in exhaust gas, comprising at least Rh; a complex oxide that is the following Ce-containing component (A) and/or the following Zr-containing component (B); and alumina, wherein Rh is supported on alumina together with the complex oxide, an amount of Rh supported is 0.01 to 5 wt% based on a total amount of Rh, the complex oxide, and alumina, and a total content of the complex oxide is 0.1 to 15 wt% in total based on the total amount of Rh, the complex oxide, and alumina.
component (A):
   one or more selected from the group consisting of a Ce-Zr complex oxide, a Ce-Nd complex oxide, a Ce-Pr complex oxide, a Ce-La complex oxide, and a Ce-Y complex oxide; a Ce-Zr-Nd complex oxide, a Ce-Zr-Pr complex oxide, a Ce-Zr-La complex oxide, a Ce-Pr-La complex oxide, a Ce-Zr-Y complex oxide, a Ce-Nd-Pr complex oxide, a Ce-Nd-La complex oxide, a Ce-Nd-Y complex oxide, a Ce-Pr-Y complex oxide, and a Ce-La-Y complex oxide; a Ce-Zr-Nd-Pr complex oxide, a Ce-Zr-Nd-La complex oxide, a Ce-Nd-Pr-La complex oxide, a Ce-Zr-Pr-La complex oxide, a Ce-Zr-Nd-Y complex oxide, a Ce-Zr-Ln-Y complex oxide, a Ce-Zr-Pr-Y complex oxide, a Ce-Nd-Pr-Y complex oxide, and a Ce-Pr-La-Y complex oxide; and a Ce-Nd-Ln-Y complex oxide, a Ce-Zr-Nd-Pr-Y complex oxide, a Ce-Zr-Nd-Ln-Y complex oxide, a Ce-Zr-Pr-La-Y complex oxide, a Ce-Nd-Pr-La-Y complex oxide, and a Ce-Zr-Nd-Pr-Ln-Y complex oxide,
component (B):
   one or more selected from the group consisting of a Zr-Nd complex oxide, a Zr-Pr complex oxide, and a Zr-Y complex oxide; a Zr-Nd-Pr complex oxide, a Zr-Nd-La complex oxide, a Zr-Pr-La complex oxide, a Zr-Nd-Y complex oxide, and a Zr-Pr-Y complex oxide; and a Zr-Nd-Pr-La complex oxide, a Zr-Nd-Pr-Y complex oxide, a Zr-Nd-La-Y complex oxide, a Zr-Pr-Ln-Y complex oxide, and a Zr-Nd-Pr-La-Y complex oxide

According to a second invention of the present invention, there is provided an exhaust gas-purifying catalyst composition wherein in the first invention, the content of the complex oxide is 0.1 to 10 wt% based on the total amount of Rh, the complex oxide, and alumina.

According to a third invention of the present invention, there is provided an exhaust gas-purifying catalyst composition wherein in the first invention, an average particle diameter of alumina is 0.1 to 30 µm.

According to a fourth invention of the present invention, there is provided an exhaust gas-purifying catalyst composition wherein in any of the first to third inventions, Rh and the complex oxide are highly dispersed on alumina.

In addition, according to a fifth invention of the present invention, there is provided a method for producing the exhaust gas-purifying catalyst composition of any of the first to fourth inventions, comprising dissolving at least a water-soluble Rh compound and water-soluble precursor compounds of the Ce-containing component (A) and/or the Zr-containing component (B) in water to form a mixed precursor of Rh and the compound, bringing an aqueous solution containing the mixed precursor into contact with alumina to impregnate alumina with Rh and a precursor compound of the component (A) and/or a precursor compound of the component (B) to obtain a slurry, and then filtering and drying the obtained slurry followed by firing to obtain a catalyst composition in which Rh is supported on alumina together with the complex oxide that is the component (A) and/or the component (B).

According to a sixth invention of the present invention, there is provided a method for producing the exhaust gas-purifying catalyst composition, wherein in the fifth invention, the Rh compound and the precursor compound of the component (A) and/or the precursor compound of the component (B) are all acidic salt compounds, and the mixed precursor is formed while an acid is added.

According to a seventh invention of the present invention, there is provided a method for producing the exhaust gas-purifying catalyst composition, wherein in the fifth invention, the Rh compound and the precursor compound of the component (A) and/or the precursor compound of the component (B) are all basic compounds, and the mixed precursor is formed while a base is added.

According to an eighth invention of the present invention, there is provided a method for producing the exhaust gas-purifying catalyst composition, wherein in any of the fifth to seventh inventions, the slurry is dried by spray drying.

According to a ninth invention of the present invention, there is provided a method for producing the exhaust gas-purifying catalyst composition, comprising mixing an aqueous medium comprising a binder and an acid or a base with the catalyst composition in which Rh is supported on alumina together with the complex oxide that is the component (A) and/or the component (B), followed by grinding for slurrying, in any of the fifth to eighth inventions.

According to a tenth invention of the present invention, there is provided a method for producing the exhaust gas-purifying catalyst composition, wherein in any of the fifth to ninth inventions, an average particle diameter D90 of the slurry is 1 to 20 µm.

In addition, according to an eleventh invention of the present invention, there is provided an automobile exhaust gas-purifying catalyst comprising at least a honeycomb support; and a catalyst layer, wherein the honeycomb support is coated with the exhaust gas-purifying catalyst composition of any of the first to fourth inventions as the catalyst layer.

According to a twelfth invention of the present invention, there is provided an automobile exhaust gas-purifying catalyst wherein in the eleventh invention, the catalyst layer contains a catalyst composition in which Rh is supported on the complex oxide that is the component (A) and/or the component (B).

According to a thirteenth invention of the present invention, there is provided an automobile exhaust gas-purifying catalyst wherein in the eleventh or twelfth invention, a total amount of the coating of the catalyst composition is 20 to 300 g/L of unit volume of the honeycomb support.

### Advantageous Effects of Invention

According to the exhaust gas-purifying catalyst composition of the present invention, compared with conventional Rh-supporting OSC materials and Rh-supporting alumina catalysts, the purification activity for hydrocarbons, carbon monoxide, nitrogen oxides, and the like at low temperature is excellent; the activity is high, particularly the temperature of a gas at the catalyst inlet when the reaction rate reaches 50% (T50) is low; and the purification rate can be improved even at a high temperature of 400°C or more. The exhaust gas-purifying catalyst composition of the present invention exhibits excellent purification performance for CO, HC, and NOx discharged from an internal combustion engine such as a gasoline engine. Further, the automobile exhaust gas-purifying catalyst of the present invention is excellent in endurance. The automobile exhaust gas-purifying catalyst also requires a relatively small amount of Rh blended, and therefore it can be produced at low cost. Thus, an exhaust gas-purifying apparatus can be stably produced and supplied.

### Brief Description of Drawings

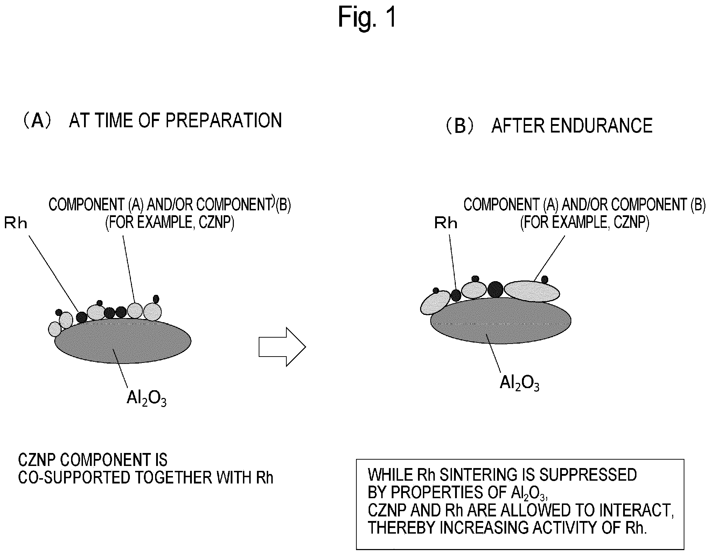

[Figure 1] Figure 1 is an explanatory diagram schematically showing the concept of the exhaust gas-purifying catalyst composition of the present invention. (A) shows a cross section of a catalyst particle at the time of the preparation of an automobile exhaust gas-purifying catalyst, and (B) shows a cross section of a catalyst particle after high temperature endurance treatment on the catalyst particle shown in (A).

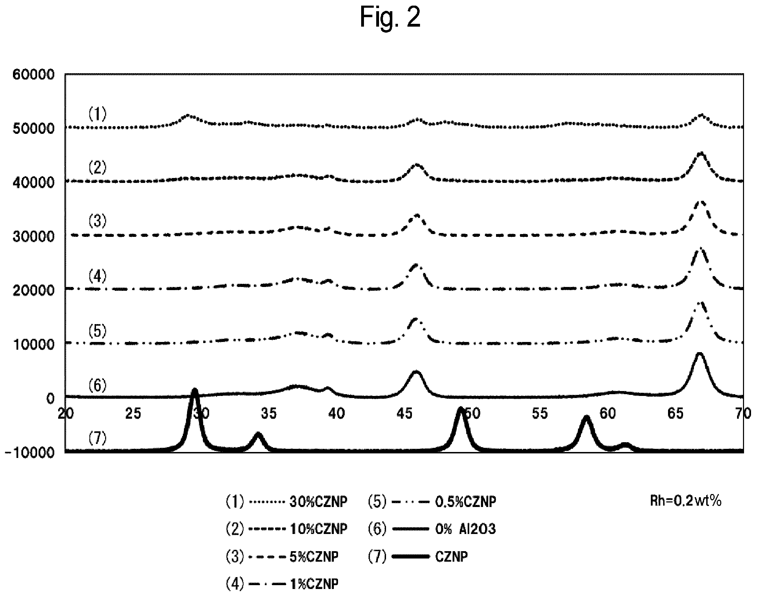

[Figure 2] Figure 2 is a chart showing the results of powder X-ray diffraction measurement using an X-ray diffractometer (XRD), for the catalyst samples of Examples and Comparative Examples.

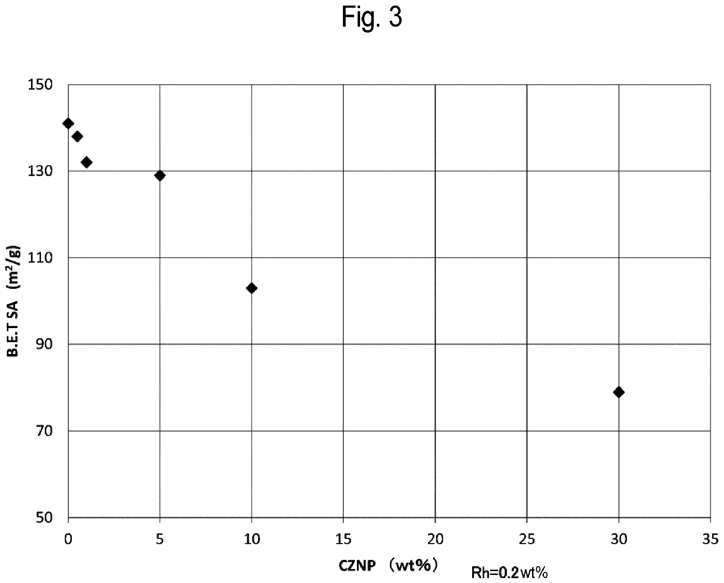

[Figure 3] Figure 3 is a graph showing the relationship between the content of the complex oxide of a component (A) and/or the complex oxide a component (B) and the specific surface area (BET SA) in the catalyst samples of the Examples and the Comparative Examples.

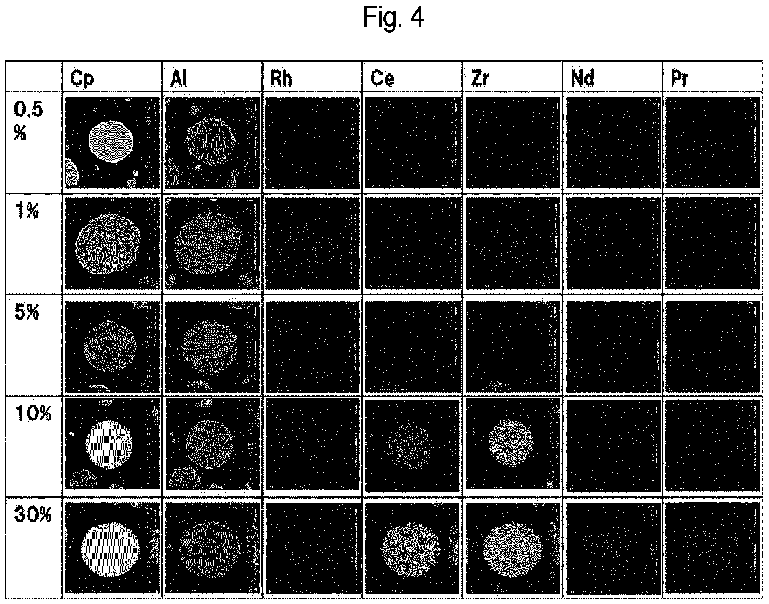

[Figure 4] Figure 4 shows photographs showing the results of measurement by an electron probe micro analyzer (EPMA) for the catalyst samples of the Examples.

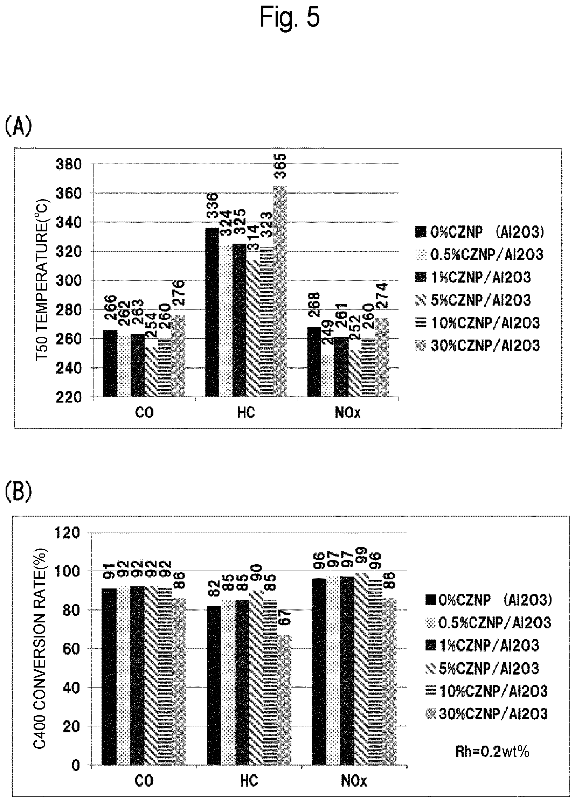

[Figure 5] Figure 5 shows graphs showing the results of a light-off test using a model gas, for the honeycomb catalysts (automobile exhaust gas-purifying catalysts) of Examples and Comparative Examples. (A) is a graph showing the results of measuring the temperatures of the gas at the catalyst inlet when the NOx reduction rate and the HC oxidation rate reached 50% (NOxT50, COT50, and HCT50), and (B) is a graph relatively showing CO, HC, and NOx conversion rates at 400°C.

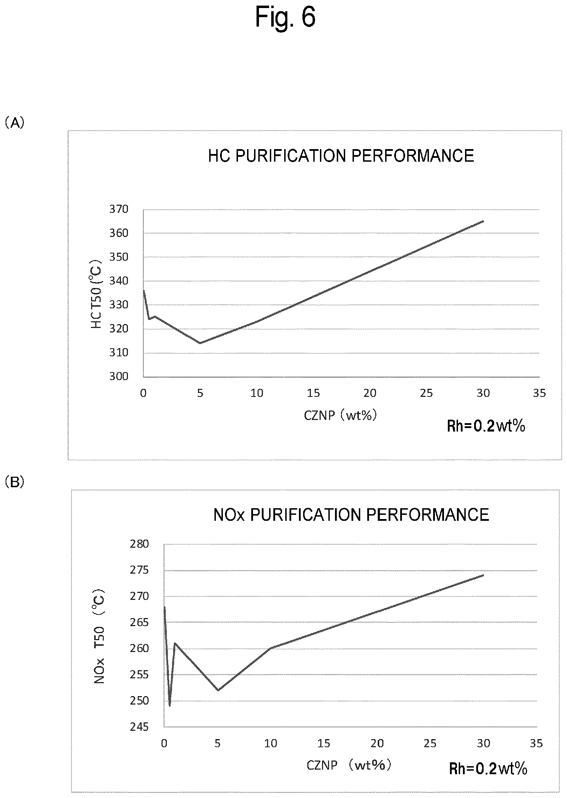

[Figure 6] Figure 6 shows graphs showing the results of a light-off test using a model gas, for the honeycomb catalysts (automobile exhaust gas-purifying catalysts) of the Examples and the Comparative Examples. (A) is a graph showing the relationship between the content of the complex oxide of the component (A) and/or the complex oxide of the component (B) and HCT50, and (B) is a graph showing the relationship between the content of the complex oxide and NOxT50.

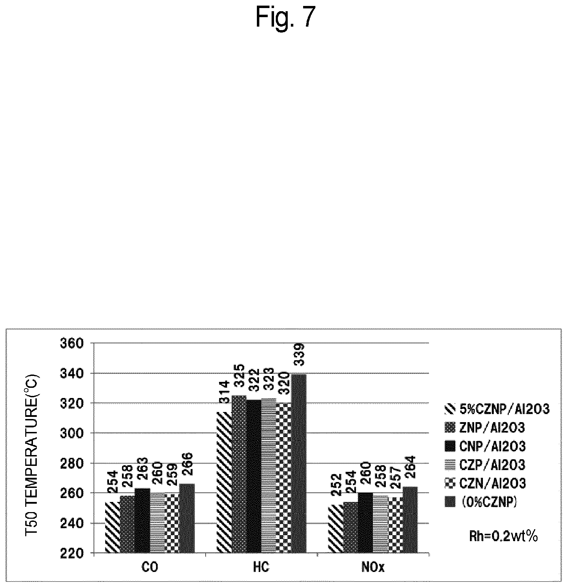

[Figure 7] Figure 7 is a graph showing the results of the evaluation of the catalytic activity by a model gas light-off test as in Figure 5 using samples of a complex oxide of a three element-based component (A) and/or component (B), based on a catalyst powder of a complex oxide of a four element-based component (A), the three element-based component lacking any element of the four element-based component.

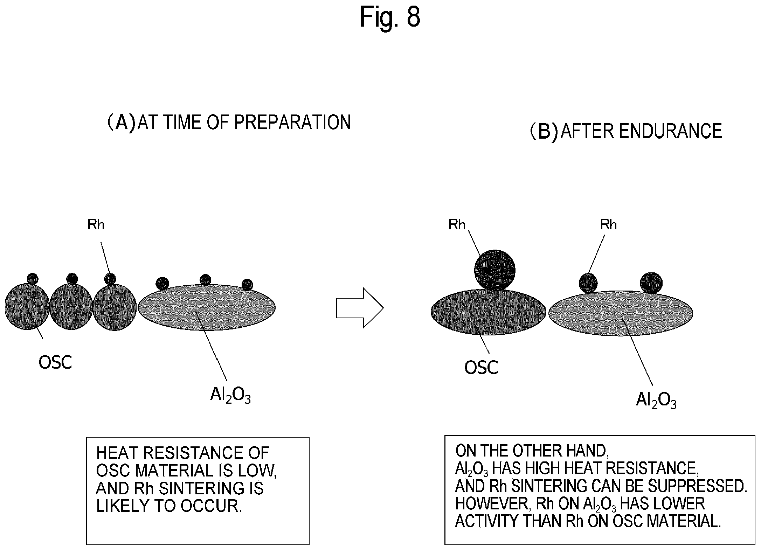

[Figure 8] Figure 8 is an explanatory diagram of conventional art schematically showing structural change between a catalyst in which Rh is directly supported on alumina and the catalyst when used under high temperature. (A) shows a cross section of a catalyst particle at the time of preparation, and (B) shows a cross section of a catalyst particle after high temperature endurance treatment on the catalyst particle shown in (A).

### Description of Embodiments

Embodiments of the present invention will be described in detail below. The following embodiments are illustrations for explaining the present invention, and the present invention is not limited to these. As used herein, for example, the description of the numerical value range "1 to 100" includes both the upper limit value "1" and the lower limit value "100". The same applies to the description of other numerical value ranges. Embodiments of the exhaust gas purification of a gasoline engine will be mainly described hereinafter, but it is needless to say that the present invention is not limited to them and is also effective for the purification of exhaust gas discharged from internal combustion engines such as diesel engines and electric generators.

### 1. Exhaust Gas-Purifying Catalyst Composition

The exhaust gas-purifying catalyst composition in this embodiment (hereinafter also simply referred to as a catalyst composition) is a catalyst composition containing at least Rh, a complex oxide that is a particular Ce-containing component (A) and/or a particular Zr-containing component (B), and alumina, wherein Rh is supported in a particular amount on alumina matrix particles together with the complex oxide.

As described above, it is known that the oxygen diffusivity on the matrix surface in a catalyst powder in which Rh is supported on matrix particles comprising a material having OSC or zirconia, as in the conventional art, is better than that in alumina supporting Rh, and that therefore the light-off activity of the former at the start of use is higher. On the other hand, the material having OSC or zirconia, the matrix, has lower endurance than alumina, which is problematic. This is schematically shown in Figure 8. Rh particles with a small particle diameter are supported on the surfaces of both a material having OSC or zirconia and alumina at the time of catalyst preparation. When these are exposed to high temperature, for example, 1000°C or more, in endurance treatment, the particle diameter of the Rh particles on the OSC matrix particles increases due to sintering, and a decrease in catalytic performance due to a decrease in catalytically active sites occurs. In addition, the Rh particles on the alumina matrix particles have low catalytic activity compared with the Rh particles on the OSC matrix particles. Therefore, as the entire catalyst powder, the catalytic activity decreases.

Accordingly, in order to solve such a problem, a complex oxide that is the component A (for example, a Ce/Zr/Nd/Pr complex oxide (hereinafter sometimes abbreviated as "CZNP")) and/or the component (B) are placed on the surfaces of alumina matrix particles together with Rh in the catalyst powder in this embodiment. Thus, while the endurance of Rh-supporting alumina is ensured, the oxygen diffusivity on the alumina matrix particle surfaces is increased, and the catalytic activity of the Rh particles on the alumina matrix particles is improved. This is schematically shown in Figure 1.

This mechanism is not clear but is estimated as follows. The Rh particles are supported on the surfaces of both the material having OSC or zirconia and alumina, and are present in a highly dispersed state near the complex oxide that is the component (A) and/or the component (B) on the alumina matrix particle surfaces. Therefore, it is considered that even if the Rh particles are exposed to a high temperature of 1000°C or more to increase the particle diameter, the extent of the particle diameter increase of the Rh particles on the alumina matrix particles is kept lower than that of the Rh particles on the material having OSC or zirconia shown in Figure 8, and also the catalytic activity of the Rh particles on the alumina matrix particles improves by interaction with the complex oxide that is the component (A) and/or the component (B). Thus, a decrease in catalytic activity is suppressed in total even after a long time at high temperature. The same mechanism is considered not only for the complex oxide of the Ce-containing component (A), but also for the complex oxide of the Zr-containing component (B). The complex oxide of the component (A) can also be considered as a material having OSC and showing good interaction with Rh, and it can also be considered that the complex oxide of the component (B) exhibits, on Al₂O₃, the characteristics of ZrO₂ analogous to a material having OSC.

### (1) Rhodium (Rh)

In the catalyst powder (catalyst composition) in this embodiment, Rh, a precious metal element, mainly functions as an active metal for reducing NOx in exhaust gas. The Rh particles are supported on alumina and at this time need to be supported together with the complex oxide that is the component (A) and/or the component (B). The presence of the Rh particles on the matrix particles can be grasped by various measurement methods such as observation by a Scanning Transmission Electron Microscope (STEM), Powder X-ray Diffraction (XRD), an Electron Probe Micro Analyzer (EPMA), and X-ray Photoelectron Spectroscopy (XPS) or Electron Spectroscopy for Chemical Analysis (ESCA).

The Rh particles are not limited by the average particle diameter thereof, but the average particle diameter is preferably 100 nm or less in view of the maintenance of catalytic performance by dispersibility. The average particle diameter is more preferably 80 nm or less, further preferably 50 nm or less. The lower limit of the average particle diameter of Rh is not particularly limited but is generally preferably 0.1 nm or more. As used herein, the average particle diameter of the Rh particles means the average value of the particle diameters of 20 particles extracted at random in an SEM image of the exhaust gas-purifying catalyst composition after endurance treatment at a magnification of 10,000x.

The amount of Rh supported on the alumina matrix particles in this embodiment is 0.01 to 5.0 wt% based on the total amount of Rh, the complex oxide, and alumina. In view of denitration performance, price, and the like, the amount of Rh supported is preferably 0.05 to 2.0 wt%, more preferably 0.1 to 1.0 wt%.

### (2) Alumina

In the catalyst powder (catalyst composition) in this embodiment, alumina is one of porous inorganic oxides that function as matrix particles supporting Rh in a highly dispersed state. Specific examples of such alumina include, but are not particularly limited to, γ-alumina, β-alumina, δ-alumina, and θ-alumina. The BET specific surface area of alumina is not particularly limited but is preferably 20 to 250 m²/g, more preferably 80 to 250 m²/g, and particularly preferably 100 to 200 m²/g in view of the high dispersibility of Rh, gas diffusivity in the pores related to the diameter of the pores in the particles, and the like. As used herein, the BET specific surface area means a value obtained by a BET one-point method using Tristar II3020 (manufactured by SHIMADZU CORPORATION).

The average particle diameter of alumina is not particularly limited but is preferably 50 µm or less, more preferably 40 µm or less, in view of gas diffusion and the like. The lower limit of the average particle diameter of alumina is not particularly limited but is usually preferably 0.1 µm or more. As used herein, the average particle diameter of alumina means a median diameter D₅₀ measured by a laser diffraction particle size distribution measuring apparatus (for example, a laser diffraction particle size distribution measuring apparatus SALD-7100 manufactured by SHIMADZU CORPORATION).

### (3) Complex Oxide of Component (A) and Complex Oxide of Component (B)

In the catalyst powder (catalyst composition) in this embodiment, the complex oxide of the component (A) and the complex oxide of the component (B) are complex oxides comprising Ce and/or Zr that allow Rh, which is a precious metal, to be supported on alumina in a highly dispersed state and enhance the catalytic activity of Rh on alumina.

Specifically, the component (A) is one or more Ce-containing complex oxides selected from the group below:
a Ce-Zr complex oxide (CZ), a Ce-Nd complex oxide (CN), a Ce-Pr complex oxide (CP), a Ce-La complex oxide (CL), and a Ce-Y complex oxide (CY); a Ce-Zr-Nd complex oxide (CZN), a Ce-Zr-Pr complex oxide (CZP), a Ce-Zr-La complex oxide (CZL), a Ce-Zr-Y complex oxide (CZY), a Ce-Nd-Pr complex oxide (CNP), a Ce-Nd-La complex oxide (CNL), a Ce-Nd-Y complex oxide (CNY), a Ce-Pr-La complex oxide (CPL), a Ce-P-Y complex oxide (CPY), and a Ce-La-Y complex oxide (CLY); a Ce-Zr-Nd-Pr complex oxide (CZNP), a Ce-Zr-Nd-La complex oxide (CZNL), a Ce-Zr-Nd-Y complex oxide (CZNY), a Ce-Zr-Pr-Y complex oxide (CZPY), a Ce-Nd-Pr-La complex oxide (CNPL), a Ce-Zr-Pr-La complex oxide (CZPL), a Ce-Zr-Nd-Y complex oxide (CZNY), a Ce-Zr-Ln-Y complex oxide (CZLY), a Ce-Zr-Pr-Y complex oxide (CZPY), a Ce-Nd-Pr-Y complex oxide (CNPY), a Ce-Nd-Ln-Y complex oxide (CNLY), and a Ce-Pr-La-Y complex oxide (CPLY); and a Ce-Zr-Nd-Pr-Y complex oxide (CZNPY), a Ce-Zr-Nd-Ln-Y complex oxide (CZNLY), a Ce-Zr-Pr-La-Y complex oxide (CZPLY), a Ce-Nd-Pr-La-Y complex oxide (CNPLY), and a Ce-Zr-Nd-Pr-Ln-Y complex oxide (CZNPLY)

The component (B) is one or more complex oxides containing Zr selected from the group below:
a Zr-Nd complex oxide (ZN), a Zr-Pr complex oxide (ZP), a Zr-La complex oxide (ZL), and a Zr-Y complex oxide (ZY); a Zr-Nd-Pr complex oxide (ZNP), a Zr-Nd-La complex oxide (ZNL), a Zr-Pr-La complex oxide (ZPL), a Zr-Nd-Y complex oxide (ZNY), a Zr-Pr-Y complex oxide (ZPY), and a Zr-Nd-Y complex oxide (ZNY); and a Zr-Nd-Pr-La complex oxide (ZNPL), a Zr-Nd-Pr-Y complex oxide (ZNPY), a Zr-Nd-Ln-Y complex oxide (ZNLY), a Zr-Pr-Ln-Y complex oxide (ZPLY), and a Zr-Nd-Pr-La-Y complex oxide (ZNPLY)

Among these, as the complex oxide that is the component (A) and/or the component (B), complex oxides comprising three elements or four elements of the main elements represented by CZNPLY (that is, Ce, Zr, Nd, Pr, La, and Y) are more preferred than complex oxides comprising two elements, and particularly complex oxides comprising the four elements of Ce, Zr, Nd, and Pr (CZNP), and complex oxides of five elements or complex oxides of six elements comprising these four elements of Ce, Zr, Nd, and Pr as essential components are preferred.

Ce and Zr have an important Rh catalytic function, among the elements constituting the complex oxide that is the component (A) and/or the component (B), and therefore the content of Ce and Zr is preferably 50 wt% or more in total, more preferably 60 wt% or more in total, in terms of metal oxides based on the total amount of the complex oxides. The upper limit of the content of Ce and Zr is not particularly limited but is usually preferably 90 wt% or less in total.

On the other hand, Nd and La suppress sintering of Rh, and also exhibit an improving effect on the heat resistance of CeO₂ when the amounts of all of Nd, Pr, and La are small, but it is not confirmed that they have a Rh catalytic function. Therefore, the content of Nd and La is preferably less than 50 wt% in total, more preferably 40 wt% or less in total, in terms of metal oxides based on the total amount of the complex oxides. The lower limit of the content of Nd and La is not particularly limited but is usually preferably 1 wt% or more in total. Y and Pr have a stabilizing effect on the crystal structure of Ce and Zr, and also provide possibilities of improvement in Rh activity and the like, and therefore Y and Pr can each be contained in an amount of 10 wt% or less.

In the catalyst powder (catalyst composition) in this embodiment, the content of the complex oxide that is the component (A) and/or the component (B) is preferably 0.1 to 15 wt% in total based on the total amount of Rh, the complex oxide, and alumina. The complex oxide that is the component (A) and/or the component (B) is supported on the alumina matrix particles in a highly dispersed state in which the crystallite diameter is several nm or less, more preferably 1 nm or less, and thus a synergistic effect with zirconia, and the effect of promoting a steam reforming reaction and a CO + NO reaction that zirconia as a matrix has can be expected. In view of these, the complex oxide that is the component (A) and/or the component (B) are more preferably contained in an amount of 0.1 to 10 wt% in total, further preferably 0.3 to 8 wt% in total.

### 2. Method for Preparing Catalyst Composition

For the exhaust gas-purifying catalyst composition in this embodiment, at least a water-soluble Rh compound and water-soluble precursor compounds of the Ce-containing component (A) and/or the Zr-containing component (B) are dissolved in water to form a mixed precursor of Rh and the compound(s); the aqueous solution containing the mixed precursor is brought into contact with alumina to impregnate alumina with Rh and the precursor compound of the component (A) and/or the precursor compound of the component (B) to obtain a slurry; and then the obtained slurry is filtered and dried followed by firing to obtain a catalyst composition in which Rh is supported on alumina together with the complex oxide that is the component (A) and/or the component (B).

In a preferred example of the production method, first, particular amounts of raw materials containing a water-soluble Rh salt, a water-soluble rare earth salt, and a zirconium salt as needed, are provided as starting raw materials, and these are mixed and stirred to form an aqueous solution.

In order to disperse Rh, a catalytic component, on activated alumina support particles, any appropriate compound and/or complex of Rh metal, a catalytic component, are used. A water-soluble compound or water-dispersible compound or complex of Rh is used such that the liquid used for impregnating or adhering the catalytic metal compound to the alumina support particles does not inhibit the reaction with the catalytic metal or the compound or complex thereof, and other components of the slurry, and can be removed from the catalyst by evaporation or decomposition by the application of heating and/or a vacuum.

For the aqueous solution of the water-soluble compound and complex of Rh, the appropriate compound is rhodium nitrate, rhodium chloride, rhodium sulfate, hexamine rhodium chloride, or the like in the case of an acidic salt, and rhodium nitrate is preferred because residues such as chlorine and sulfides do not remain after firing. Examples of the appropriate compound include rhodium hydroxide in the case of a basic compound.

The compounds of cerium, neodymium, praseodymium, lanthanum, and yttrium, which are rare earth metals, and the zirconium compound are all water-soluble, and, for example, the use of nitrates, halides, or sulfates is preferred. Nitrates are preferred because residues such as chlorine and sulfides do not remain after firing. In the case of basic compounds, examples thereof include cerium hydroxide, neodymium hydroxide, praseodymium hydroxide, lanthanum hydroxide, yttrium hydroxide, and zirconium hydroxide.

In the production method in this embodiment, it is important to measure predetermined amounts of a water-soluble Rh compound and water-soluble rare earth compounds and dissolve them in water so that a mixed precursor of Rh and the rare earth compounds and the like is formed, thereby forming an aqueous solution of the mixed precursor. The same applies to a case where a salt of a zirconium compound is included in addition to the water-soluble Rh compound and the water-soluble rare earth compounds.

At this time, when the properties (acidity-basicity) of the Rh salt aqueous solution and the aqueous solution or suspension containing the rare earth compounds and the like are different, aggregation may occur in both to form precipitates, and therefore the properties of the aqueous solutions containing rhodium and the rare earth compounds and the like are preferably uniformly acidic or basic. For example, the Rh compound and the rare earth compounds can all be acidic salt compounds, and it is effective to form a mixed precursor while further adding an acid. Specifically, it is preferred to add an acid while mixing the aqueous solution, and sufficiently stir the mixture. At this time, the mixture may be at ordinary temperature but can also be heated to 40 to 80°C. When the Rh compound and the rare earth compounds, or the Rh compound, the rare earth compounds, and the zirconium compound, are all basic compounds, it is effective to form a mixed precursor while further adding a base such as ammonia (NH₃), sodium carbonate (Na₂CO₃), sodium hydroxide (NaOH), or potassium hydroxide (KOH). Specifically, it is preferred to add a base while mixing the aqueous solution, and sufficiently stir the mixture. At this time, the mixture may be at ordinary temperature but can also be heated to 40 to 80°C.

Next, after a uniform mixed precursor aqueous solution is formed, the aqueous solution is brought into contact with alumina to impregnate alumina with Rh and the rare earth compounds and the like. At this time, the system of the aqueous solution and alumina is preferably sufficiently mixed to the extent such that the separation of the liquid and the solid is not observed at least visually, or to a greater extent, and by this impregnation, Rh adheres to the surface of alumina and also enters the pores, together with the rare earth compounds and the like.

The amount of the complex oxide that is the component (A) and/or the component (B) supported on alumina is 0.1 to 15 wt% in total based on the total amount of Rh, the complex oxide, and alumina in view of the supported state and cost. In this range, a synergistic effect with zirconia, and the effect of promoting a steam reforming reaction and a CO + NO reaction that zirconia as a matrix has can be obtained.

Then, the obtained slurry is filtered and dried, and thus the above-described catalyst composition is obtained. The catalyst composition is fired, and thus Rh is supported on alumina matrix particles together with the component (A), the component (B), and the like. The form of support cannot be definitively specified. However, it is desired that the complex oxide that is the component (A) and/or the component (B) comprising rare earth oxides be present in the vicinity of Rh, and that Rh be supported on the alumina matrix particles via (the layer of) the complex oxide that is the component (A) and/or the component (B) at least in part. The means for drying the obtained slurry is not limited, and the slurry is dried by a usual drying method including drying in an oven, spray drying, freeze drying, and rotary evaporation. For example, a stationary type, a moving bed, a fluidized bed, and the like can be adopted as long as they are means that can perform heating to 50 to 150°C. Among them, spray drying is preferred in that not only the slurry is efficiently dried, but also that a catalyst composition having a uniform particle diameter is obtained by granulation at the time of drying.

The firing after the drying should be performed according to an ordinary method and is not particularly limited, and, for example, heating is performed in an atmosphere of an oxidizing gas such as air, or an inert gas selected from the group consisting of nitrogen, argon, xenon, helium and mixtures thereof, or an oxidizing gas diluted with an inert gas, at 300 to 800°C. The heating time can be appropriately set according to other conditions such as heating temperature without particular limitations but is usually about 0.5 to 20 hours in view of productivity and the like.

The D90 (the particle diameter when the accumulated value from a small particle diameter reaches 90% of the total in the volume-based particle diameter cumulative distribution) of the thus obtained catalyst powder (catalyst composition) can be appropriately set according to the desired performance without particular limitation but is preferably 1 to 20 µm, more preferably 3 to 10 µm. In order to provide the desired particle size distribution, the catalyst powder after the firing can be subjected to grinding treatment. As the grinding apparatus, for example, a ball mill can be used. By this grinding, the catalytic activity of the produced catalyst composition is further improved.

The catalyst powder in which Rh is supported on the alumina matrix particles together with the complex oxide that is the component (A) and/or the component (B) can be used as a powder as it is, and can be used by adhering and applying it to various heat-resistant substances in order to promote the filling of an apparatus and the improvement of endurance. In order to adhere and apply the catalyst powder to a heat-resistant substance, the catalyst is preferably used by mixing it with an aqueous medium comprising a binder and an acid, followed by grinding for slurrying.

The exhaust gas-purifying catalyst composition in this embodiment can be used as structure type catalysts in which various support surfaces are coated with the above catalytic component. Here, the shape of the support is not particularly limited and can be selected from prismatic, cylindrical, spherical, honeycomb, and sheet-shaped structure type supports and the like. The size of the structure type support is not particularly limited, and in the case of any of the prismatic, cylindrical, and spherical structure type supports, for example, one having a diameter (length) of several millimeters to several centimeters can be used.

### 3. Automobile Exhaust gas-purifying catalyst

The automobile exhaust gas-purifying catalyst in this embodiment comprises at least a honeycomb support and a catalyst layer, and the honeycomb support is coated with one or more layers of the above-described catalyst composition, that is, a catalyst composition comprising alumina on which Rh is supported together with the complex oxide that is the component (A) and/or the component (B), as the catalyst layer.

In addition to Rh, one or more precious metals such as Pd and Pt can be added, and further, a barium compound, a binder, and the like can also be added.

### (1) Catalyst Preparation

In order to prepare the automobile exhaust gas-purifying catalyst in this embodiment, the catalyst composition, and a binder and the like as needed, are mixed with an aqueous medium to form a slurry mixture, and then the slurry mixture is applied to a honeycomb support, dried, and fired.

In other words, first, the catalyst composition and an aqueous medium are mixed at a predetermined ratio to obtain a slurry mixture. Here, the aqueous medium should be used in an amount in which the catalyst composition can disperse uniformly in the slurry.

At this time, it is possible to blend an acid or a base for pH adjustment and blend a surfactant, a dispersing resin, and the like for the adjustment of viscosity and slurry dispersibility improvement, as needed. As the method for mixing the slurry, for example, grinding and mixing by a ball mill or the like can be applied, but other grinding or mixing methods can also be applied.

Next, the slurry mixture is applied to a honeycomb support. The application method should be performed according to an ordinary method and is not particularly limited, but generally a wash coating method is preferred.

After the application, drying and firing are performed, and thus an integral structure type catalyst in which the catalyst composition is supported is obtained. The drying temperature can be appropriately set without particular limitation but is usually preferably 70 to 200°C, more preferably 80 to 150°C. The firing temperature can be appropriately set without particular limitation but is usually preferably 300 to 700°C and preferably 400 to 600°C. For the heating means, known heating means such as an electric furnace and a gas furnace can be used.

The total amount of the catalyst composition coating the honeycomb support can be appropriately set according to the desired performance without particular limitation but is preferably 20 to 300 g/L, more preferably 50 to 280 g/L, and further preferably 100 to 250 g/L in view of ensuring a sufficient amount of the complex oxide that is the component (A) and/or the component (B), increasing the dispersibility of the precious metal, reducing an engine load due to pressure loss, and the like.

### (2) Alumina Co-Supporting Rh and Complex Oxide of Component (A) or Component (B)

Alumina supporting rhodium (Rh) and the complex oxide that is the component (A) and/or the component (B) previously described is used.

For the particle diameter of the powder used, D90 is preferably 1 to 20 µm. For application properties to the honeycomb support and activity improvement, D90 is more preferably 3 to 15 µm. In order to provide the desired particle size distribution, grinding treatment may be performed. At this time, the powder can be slurried together with other components and ground.

The amount of Rh supported on alumina is preferably 0.005 g/L to 2.0 g/L, preferably 0.01 g/L to 2.0 g/L, and more preferably 0.03 g/L to 1.5 g/L of unit volume of the honeycomb support in view of denitration performance, cost, and the like. In addition, the amount of the complex oxide that is the component (A) and/or the component (B) supported on alumina is preferably 10 g/L to 150 g/L, more preferably 30 g/L to 120 g/L, and further preferably 50 to 100 g/L of unit volume of the honeycomb support in view of suppressing a decrease in the activity of Rh, increasing denitration performance and the HC purification rate, and the like. Further, the amount of supported co-supporting alumina supporting Rh and the complex oxide that is the component (A) and/or the component (B) is preferably 20 to 200 g/L, more preferably 50 to 150 g/L, of unit volume of the honeycomb support.

### (3) Ceria-Zirconia Complex Oxide Supporting Rh

The above-described catalyst composition (the catalyst layer comprising the catalyst composition) may comprise promoter particles as needed. For example, the catalyst composition may further contain a ceria-zirconia complex oxide supporting Rh. The ceria-zirconia complex oxide used here has a function as an OSC component and a function as a matrix as described above.

As the OSC of the matrix, ceria (cerium oxide) predominates, but zirconia (zirconium oxide) is preferred in order to improve heat resistance while maintaining the OSC function. On the other hand, as the matrix, zirconia predominates, but the addition of ceria is preferred in order to promote the oxidation-reduction action of the supported precious metal. The raw material powder of the OSC component is a known material and is obtained, for example, by grinding oxide particles obtained by firing an inorganic or organic rare earth compound and one or more zirconium compounds in the air at 450 to 600°C.

In the ceria-zirconia complex oxide, the mixing ratio between ceria and zirconia is not particularly limited, but for achieving both the function as OSC and the function as a matrix, the ratio of ceria is preferably in the range of 10 to 80 wt%, more preferably in the range of 20 to 70 wt%. In order to increase heat resistance, rare earth oxides such as lanthanum oxide and praseodymium oxide may be further added to the ceria-zirconia complex oxide.

The amount of the ceria-zirconia complex oxide supporting rhodium (Rh) is preferably 20 to 150 g/L of unit volume of the honeycomb support in order to exhibit the function as OSC and the function as a matrix.

### (4) Palladium (Pd)

The above-described catalyst composition (the catalyst layer comprising the catalyst composition) may further contain palladium as needed. Palladium, a precious metal element, is an optional component, and functions as an active metal like Rh. Palladium may be supported on the above-described alumina or the above-described ceria-zirconia complex oxide.

The amount of Pd added is preferably 10.0 g/L or less, more preferably 0.5 to 6.0 g/L, of unit volume of the honeycomb support because the purification performance for HC, CO, and the like can be increased, and the cost can be reduced.

### (5) Binder and The Like

In this embodiment, a binder such as an alumina sol can be used in order to adhere to the matrix particles and the promoter particles and bond the particles.

The alumina sol is composed of fine particles of several tens nm to several µm and adheres and bonds to the matrix particles and the promoter particles. The amount of the binder is not particularly limited, and even if the amount of the binder is small, there is no particular problem if the catalyst does not peel from the honeycomb support even after endurance.

Examples of the binder can include various sols such as a silica sol, a zirconia sol, and a titania sol, in addition to an alumina sol. In addition, soluble salts such as aluminum nitrate, aluminum acetate, zirconium nitrate, and zirconium acetate can also be used. Acids such as acetic acid, nitric acid, hydrochloric acid, and sulfuric acid can also be used.

### (6) Honeycomb Support

The honeycomb support comprises a ceramic such as cordierite, silicon carbide, or silicon nitride, or a metal such as stainless steel, and as for its structure, it generally has a large number of parallel fine gas flow paths extending throughout the support. As this material, cordierite is preferred for reasons of endurance and cost.

The number of openings of the honeycomb support is set in a proper range considering the type of exhaust gas to be treated, the gas flow rate, pressure loss, removal efficiency, and the like. In order to suppress clogging due to the adhesion of PM and increase the effective use rate of the catalyst, its cell density is preferably 100 to 900 cells/inch² (15.5 to 139.5 cells/cm²), more preferably 200 to 600 cells/inch² (31 to 93 cells/cm²). The cell density means the number of cells per unit area in a cross section when the honeycomb support is cut at a right angle to the gas flow paths.

For honeycomb supports, a flow-through type structure in which gas flow paths communicate, and a wall flow type structure in which gas can flow through the wall surfaces of gas flow paths with some ends thereof sealed are widely known. In the case of the flow-through type structure, the air resistance is low, and the pressure loss of exhaust gas is small. In the case of the wall flow type structure, particulate components contained in exhaust gas can be filtered off. Both of the structures can be used for the automobile exhaust gas-purifying catalyst in this embodiment.

### (7) Layer Configuration

The automobile exhaust gas-purifying catalyst in this embodiment is one in which a honeycomb support is coated with one or more layers of the catalyst composition. For the layer configuration, one layer may be used, but two or more layers are preferably used to increase exhaust gas purification performance.

In the above-described catalyst composition, the complex oxide that is the component (A) and/or the component (B) is supported on the alumina matrix together with Rh. Thus, in the catalyst composition, the particle growth of the Rh particles is suppressed at high temperature, and also a decrease in the activity of Rh is suppressed. In other words, decrease in performance of Rh supported on the alumina matrix together with the complex oxide that is the component (A) and/or the component (B) is suppressed at high temperature in both the case where it is in a state of a single layer and mixed with a matrix on which another precious metal is supported and the case where it forms a multilayer structure with a matrix on which another precious metal is supported, and therefore excellent CO, HC, and NOx purification properties can be maintained.

The basic concept of the present invention is that rhodium (Rh) is supported on the alumina matrix together with the complex oxide that is the component (A) or the component (B) in this manner. The configuration of the layers of the catalyst, the placement of the precious metal in each layer, the type and amount of the promoter (a compound comprising a rare earth, an alkali metal, an alkaline earth metal, a transition metal, and the like) and the placement of the promoter in each layer, and the like are appropriately determined according to the specifications and displacement of an engine mounted in a car, catalyst volume allowed in the car body, the number of catalysts used, the allowed type, amount, and ratio of the precious metal, and the like.

### Examples

The features of the present invention will be more specifically described below by giving Examples of the present invention and Comparative Examples, but the present invention is not construed as limited to these Examples. The materials, amounts used, proportions, details of treatment, treatment procedures, and the like shown in the following Examples can be appropriately changed without departing from the spirit of the present invention. The conditions of the heat treatment of a catalyst sample to be evaluated, physical properties such as the size of crystallites, a specific surface area (BET SA), and the dispersibility of elements, and a catalyst activity test were as follows.

### <Catalyst Heat Treatment Conditions>

Each catalyst powder obtained in the following Examples and Comparative Examples was fired in an electric furnace at 1,050°C for 12 hours (endurance) and then heated under a 1% hydrogen atmosphere at 800°C for 2 hours (pretreatment) to provide an evaluation sample.

### <Size of Crystallites>

Measurement was performed on an alumina sample co-supporting Rh and the component (A) and/or the component (B), using "X'Pert Pro (manufactured by PANalytical)" as an X-ray diffractometer (XRD). The size of crystallites was estimated by this XRD.

### <Specific Surface Area (BET SA)>

Tristar II3020 (manufactured by SHIMADZU CORPORATION) was used as a BET SA measuring apparatus.

### <Dispersibility of Elements>

The dispersibility of rare earth metals and the like was measured using an Electron Probe Micro Analyser (EPMA) JXA-8100 manufactured by JEOL. The cross-sectional distribution of particular elements in a catalyst sample is found by electron beam irradiation.

### <Model Gas Evaluation Test>

Each honeycomb catalyst obtained was subjected to rich/lean endurance heat treatment at 1,050°C for 12 hours and then cut to the size of a model gas evaluation catalyst (25.4 mm diameter × 30 mm length, 15.2 mL) using a core drill and a diamond cutter, and model gas light-off test activity thereof was evaluated by a model gas evaluation apparatus under the following conditions. The evaluation was performed by increasing the temperature from 100°C to 500°C at 30°C/min, using a model gas simulating air/fuel ratio: 14.7 ± 0.15 Hz. The catalyst bed temperatures of the catalyst when the NOx reduction rate and the HC oxidation rate reached a numerical value of 50% (NOxT50, COT50, and HCT50) were measured.

**[Table 1]**

| | | |
|---|---|---|
| Catalyst temperature range | | 100-500°C |
| Temperature increase rate | | 30°C/min |
| Flow rate | | 24L/min |
| Space velocity | | 56,800 h⁻¹ |
| Components | N₂ | Balance |
| | CO₂ | 14.00% |
| | O₂ | 0.35% |
| | NO | 0.15% |
| | CO | 0.50% |
| | C₃H₆ | 0.04% |
| | H₂₀ | 10.00% |

### (Example 1)

A catalyst composition (catalyst powder) was prepared by the following procedure.

### <Rh and Component (A) and/or Component (B)-Supporting Alumina>

Rhodium nitrate in an amount of 0.2 wt% in terms of Rh, cerium nitrate in an amount of 1.4 wt% in terms of CeO₂, zirconium nitrate in an amount of 2.9 wt% in terms of ZrO₂, neodymium nitrate in an amount of 0.35 wt% in terms of Nd₂O₃, and praseodymium nitrate in an amount of 0.35 wt% in terms of Pr₆O₁₁, based on the total of an γ-alumina powder, rhodium (Rh), and complex oxide that is the component (A) and/or the component (B) (CZNP) used, were measured and diluted with pure water, and nitric acid was added. The mixture was heated to 40 to 50°C and sufficiently stirred to prepare a mixed precursor slurry.

Next, this mixed precursor slurry was mixed with a commercial high purity γ-alumina powder having a BET specific surface area of 150 m²/g, an average pore diameter of 15 nm, and a content of rare earth compounds and Zr compounds equal to or less than the detection limit, to impregnate and support rhodium (Rh) and the rare earth-based compounds on the γ-alumina support.

Then, this water-containing powder was dried and then fired in air at 500°C and for 1 hour to prepare the catalyst powder of Example 1, that is, a 0.2 wt% Rh and 5 wt% component (A) and/or component (B)-co-supporting alumina (Rh-Ce-Zr-Nd-Pr/Al₂O₃, CZNP content: 5 wt%). The complex oxide (CZNP) used here corresponds to the component (A) but is described as the component (A) and/or the component (B), and the reason for this is as follows: it is highly dispersed on the γ-alumina support, and other complex oxides such as ZNP free of Ce are slightly produced and supported on a partial surface of the γ-alumina support. The same applies hereinafter.

Using the obtained Rh and component (A) and/or component (B)-co-supporting alumina as a sample, the crystallite diameter was measured by the XRD apparatus, and the BET SA value was measured, and EPMA images were taken.

The results are shown in the chart in Figure 2, the graph in Figure 3, and photographs in Figure 4. As shown in the chart in Figure 2, no value detectable as a peak is seen around 28, and therefore the crystallite diameter of the component (A) and/or the component (B) of the catalyst of Example 1 is considered to be 1 nm or less. In addition, as shown in the graph in Figure 3, the BET SA value of the catalyst of Example 1 was 128 m²/g. Further, in the EPMA images shown in the photographs in Figure 4, only Zr is slightly confirmed in addition to Al, and other elements can be hardly confirmed. Therefore it is found that Rh and the component (A) and/or the component (B) are supported on the γ-alumina support in a highly dispersed state.

### (Comparative Example 1)

The catalyst of Comparative Example 1 was prepared in the same manner as in Example 1, except that the component (A) and/or the component (B) were not used. Specifically, Rh was supported on an γ-alumina support by the following procedure using a commercial high purity γ-alumina powder having a content of rare earth compounds and Zr compounds equal to or less than the detection limit.

### <Rh-Supporting Alumina>

Rhodium nitrate in an amount of 0.2 wt% in terms of Rh, based on the total of an γ-alumina powder and rhodium (Rh) used, was measured and diluted with pure water to prepare a slurry. This slurry was mixed with a commercial high purity γ-alumina powder having a BET specific surface area of 150 m²/g, an average pore diameter of 15 nm, and a content of rare earth compounds and Zr compounds equal to or less than the detection limit, to impregnate and support Rh on the γ-alumina support.

Then, this water-containing powder was dried and then fired in air at 500°C and for 1 hour to prepare the catalyst of Comparative Example 1, that is, a 0.2 wt% Rh-supporting alumina.

Using the obtained Rh-supporting alumina as a sample, the crystallite diameter was measured by the XRD apparatus, and the BET SA value was measured.

The results are shown in the chart in Figure 2 and the graph in Figure 3. The catalyst of Comparative Example 1 did not include the component (A) and/or the component (B), and therefore no peak was detected around 28 in the chart in Figure 2. In addition, as shown in the graph in Figure 3, the BET SA value of the catalyst of Comparative Example 1 was 142 m²/g.

### (Examples 2 to 4 and Comparative Example 2)

Rh and the component (A) and/or the component (B) were impregnated and supported on an γ-alumina support followed by drying and firing to prepare each of the catalysts of Examples 2 to 4 and Comparative Example 2 in the same manner as in Example 1, except that the amount of the component (A) and the component (B) was changed so that the content of the component (A) and/or the component (B) was in the range of 0.5 to 30.0 wt%.

Using the obtained Rh-component (A) and/or component (B)-co-supporting alumina as a sample, the crystallite diameter was measured by the XRD apparatus, and the BET SA value was measured, and EPMA images were taken.

The results are shown in the chart in Figure 2, the graph in Figure 3, and photographs in Figure 4. As shown in the chart in Figure 2, when the CZNP content was 10 wt% or more, a value detectable as a peak was confirmed from around 28. The crystallite diameter of the component (A) and/or the component (B) of the catalysts of Example 2 (CZNP content: 10 wt%) and Comparative Example 2 (CZNP content: 30 wt%) is considered to be 1 to 100 nm, and the crystallite diameter of the component (A) and/or the component (B) of the catalysts of Example 3 (CZNP content: 1 wt%) and Example 4 (CZNP content: 0.5 wt%) is considered to be 1 nm or less.

As shown in the graph in Figure 3, the BET SA value decreased with an increase in CZNP content. When the CZNP content was 0.5 wt%, the BET SA value was 138 m²/g. When the CZNP content was 30 wt%, the BET SA value was 80 m²/g.

Further, in the EPMA images shown in the photographs in Figure 4, even when the CZNP content is 10 wt% or more, only Zr is significantly confirmed in addition to Al, while other elements is hardly confirmed, even when the CZNP content is 10 wt% or more. Therefore, it is found that in the catalysts of Examples 2 to 4 and Comparative Example 2, Rh and the component (A) and/or the component (B) are supported on the γ-alumina support in a highly dispersed state as in Example 1, in which the CZNP content is 5 wt%.

### "Evaluation Results 1"

The results of measuring the crystallite diameter with the XRD apparatus using the obtained Rh and component (A) and/or component (B)-co-supporting alumina as a sample are as shown in the chart in Figure 2. For a value detectable as a peak, the calculation range of the crystallite diameter is said to be generally about 1 to 100 nm though it depends.

From the results of the chart shown in Figure 2, it is found that when more than 10 wt% of CZNP is contained, the X-ray diffraction peak due to CZNP is confirmed, and that the peak due to alumina tends to decrease. Thus, it is found that the crystallites of rare earth-based CZNP supported on the alumina support surface tend to increase with an increase in the amount of CZNP.

In addition, from the results of BET SA measurement shown in Figure 3, it was confirmed that when more than 10 wt% of CZNP was contained, the BET SA value decreased significantly. From this, it is inferred that the surface area of the alumina support tends to decrease because CZNP enters the pores of the alumina support. It is inferred that when the content of CZNP is high, the sample has a state in which a thin film is formed on the outer surface while the pores of the alumina support are filled, or a state in which the pores of the alumina support are completely filled while a somewhat thick film is formed on the outer surface.

When the EPMA images shown in Figure 4 were observed, Rh and the component (A) and/or the component (B) were all supported on the γ-alumina support in a highly dispersed state in the catalysts of Examples 2 to 4 and Comparative Example 2, and it was shown that the dispersibility of CZNP, which was the component (A) and/or the component (B), had a correlation with its content. In other words, it is found that with an increase in the content of CZNP, its dispersibility tends to decrease, and it is also found that in catalysts including 0.5 wt% or more and 5 wt% or less of CZNP, CZNP is particularly highly dispersed, and conversely, that catalysts including more than 10 wt% of CZNP, the dispersibility tends to decrease gradually.

The physical properties of the Rh and component (A) and/or component (B)-co-supporting alumina samples described above are generalized as follows: the CZNP as the component (A) and/or the component (B), which are also catalytically active components, can be effectively supported, for example, by impregnating alumina with it in a state of a mixed precursor slurry, and can be supported with good dispersibility even if the amount of CZNP supported is as large as 30 wt%.

With a larger BET SA value and a smaller crystallites, the exhaust gas purification performance is higher. Therefore, it can be said that considering these, the amount of rare earth-based CZNP supported on an alumina support should be determined.

It is considered that best performance can be expected when the content of CZNP, which is the component (A) and/or the component (B), is about 5 wt%. But, even a catalyst including 30 wt% of CZNP can be used without practical problems in some cases depending on the type of exhaust gas of interest, the engine operating condition, and the like, when the selection of raw materials, and the catalyst preparation method and conditions are optimized. The same applies to a catalyst including 0.1 to 1 wt% of CZNP in a small amount and having good dispersibility, and it can be used without practical problems in some cases depending on the type of exhaust gas of interest, the engine operating condition, and the like.

### (Example 5)

### <Honeycomb Catalyst>

A lower layer and an upper layer were sequentially formed on a honeycomb support by the following procedure using <Rh and component (A) and/or component (B)-co-supporting alumina> prepared in the above Example 1, to prepare the honeycomb catalyst of Example 5.

### • Lower Layer

An γ-alumina powder (BET SA = 150 m²/g, Al₂O₃ = 100%, D90 = 50 µm product), pure water, and acetic acid (AcOH) were added, and mixed and ground in a wet ball mill to prepare a slurry with D90 = 9 µm. This slurry was applied to a honeycomb support (1 inch × 30 mmL, 600 cells/3.5 mil.) followed by drying and firing.

### • Upper Layer

Rh/OSC, an γ-alumina powder (BET SA = 150 m²/g, Al₂O₃ = 100%, D90 = 50 µm product), pure water, and nitric acid (HNO₃) were mixed and ground with <Rh-component (A) and/or component (B)-co-supporting alumina> prepared by the method of Example 1, in a wet ball mill to prepare a slurry with D90 = 12 µm. This slurry was applied to the honeycomb support on which the lower layer was formed, followed by drying and firing. For Rh/OSC, 0.2 wt% Rh supported on OSC (Ce/Zr/Nd/Pr = 28/58/7/7, oxide weight basis, D90 = 24 µm product) by an impregnation method was used.

In this upper layer, Rh(0.2)-Ce(1.4)-Zr(2.9)-Nd(0.35)-Pr(0.35)/Al₂O₃ in which 5 wt% of Ce-Zr-Nd-Pr is supported on Al₂O₃ is applied together with Rh(0.2)/OSC in an amount of 90 g/L in total (The numerical values in parentheses are weight proportions in terms of oxides. The same applies hereinafter.).

Next, the model gas evaluation test was performed by the above procedure using as a sample the honeycomb catalyst of Example 5 thus prepared. The measurement results of HC T50, CO T50, and NOx T50 are shown in a graph in Figure 5 together with those of other Examples and Comparative Examples.

### (Comparative Example 3)

The honeycomb catalyst of Comparative Example 3 was prepared in the same manner as in Example 5 except that at the time of the formation of the upper layer, the catalyst <Rh-supporting alumina> of Comparative Example 1 was used instead of the catalyst <Rh and component (A) and/or component (B)-co-supporting alumina> prepared by the method of Example 1.

In this upper layer, the Rh-supporting alumina catalyst powder as Rh(0.2)/Al₂O₃ is applied together with Rh/OSC in an amount of 90 g/L. Here, CZNP, which is OSC, has a Ce/Zr/Nd/Pr weight ratio of 28/58/7/7 in terms of oxides, and Al₂O₃ is pure alumina comprising no rare earth metals or the like.

Next, the model gas evaluation test was performed by the above procedure using as a sample the honeycomb catalyst of Comparative Example 3 thus prepared. The measurement results of HC T50, CO T50, and NOx T50 are shown in a graph in Figure 5 together with those of other Examples and Comparative Examples.

### (Examples 6 to 8)

The honeycomb catalysts of Examples 6 to 8 were prepared in the same manner as in Example 5 except that at the time of the formation of the upper layer, the catalysts <Rh and component (A) and/or component (B)-supporting alumina> prepared by the methods of Examples 2 to 4 were used at the weight ratios shown below, instead of the catalyst <Rh and component (A) and/or component (B)-supporting alumina> prepared by the method of Example 1. The details of the catalysts in the Examples are as shown below, and the numerical values in ( ) for the metal components are in wt% based on the total amount of Rh, the complex oxide of the component (A), and alumina.

### • Example 6: 0.2 wt% Rh-0.5 wt% Ce-Zr-Nd-Pr/Al₂O₃:

Rh(0.2)/OSC and Rh(0.2)-Ce(0.2)-Zr(0.2)-Nd(0.05)-Pr(0.05)/Al₂O₃ are contained in the upper layer in an amount of 90 g/L in total.

### • Example 7: 0.2 wt% Rh-1.0 wt% Ce-Zr-Nd-Pr/Al₂O₃:

Rh(0.2)/OSC and Rh(0.2)-Ce(0.4)-Zr(0.4)-Nd(0.1)-Pr(0.1)/Al₂O₃ are contained in the upper layer in an amount of 90 g/L in total.

### • Example 8: 0.2 wt% Rh-10.0 wt% Ce-Zr-Nd-Pr/Al₂O₃:

Rh(0.2)/OSC and Rh(0.2)-Ce(2.8)-Zr(5.8)-Nd(0.7)-Pr(0.7)/Al₂O₃ are contained in the upper layer in an amount of 90 g/L in total.

Next, the model gas evaluation test was performed by the above procedure using as samples the honeycomb catalysts of Examples 6 to 8 thus prepared. The results of HC T50, CO T50, and NOx T50 are shown in a graph in Figure 5. A graph showing the relationship between the content of the complex oxides of the component (A) and/or the component (B) and HCT50, and a graph showing the relationship between the content of the complex oxides of the component (A) and/or the component (B) and NOxT50 are shown in Figure 6.

### (Comparative Example 4)

The honeycomb catalyst of Comparative Example 4 was prepared in the same manner as in Example 5 except that at the time of the formation of the upper layer, the catalyst <Rh and component (A) and/or component (B)-supporting alumina> prepared by the method of Comparative Example 2 was used at the weight ratio shown below, instead of the catalyst <Rh and component (A) and/or component (B)-supporting alumina> prepared by the method of Example 1.

In this upper layer, 30.0 wt% Ce-Zr-Nd-Pr/Al₂O₃ is applied as Rh(0.2)-Ce(8.4)-Zr(17.4)-Nd(2.1)-Pr(2.1)/Al₂O₃ together with Rh(0.2)/OSC in an amount of 90 g/L in total. The numerical values in ( ) for the metal components are in wt% based on the total amount of Rh, the complex oxide of the component (A), and alumina.

Next, the model gas evaluation test was performed by the above procedure using as a sample the honeycomb catalyst of Comparative Example 4 thus prepared. The evaluation results of the model gas evaluation test are shown in Figures 5 and 6.

### "Evaluation Results 2"

From the graphs showing the results of the model gas evaluation test, that is, Figure 5 and Figure 6 summarizing the model gas evaluation test of the above catalysts after rich/lean endurance heat treatment at 1,050°C for 12 hours, the following are found for NOx, CO, and HC purification properties. The T50 temperature is catalyst inlet gas temperature when the NOx or HC purification rate reaches 50%, and is an indicator of low temperature activity. Lower T50 indicates that the reaction starts from a lower temperature, and can be evaluated as high catalytic activity.

In the catalyst of Example 5, the catalyst composition which contained 5 wt% of CZNP as the component (A) and in which CZNP was supported on the surface of alumina together with Rh was applied to the honeycomb support, and the catalyst of Example 5 exhibited excellent low temperature activity/purification rate at high temperature for HC, CO, and NOx compared with the catalyst of Comparative Example 3, in which CZNP was not supported. Examples 6 to Example 8 were cases where the content of CZNP was varied from 0.5 wt% to 10 wt%, and it was confirmed that by using alumina supporting Rh together with CZNP, the performance improved in all cases in terms of low temperature activity/purification rate at high temperature compared with the alumina catalyst of Comparative Example 3, in which CZNP was not supported.

Thus, it can be said that in the case where the matrix supporting rhodium is alumina, the HC, CO, and NO purification performance of the catalyst composition at low temperature improves when Rh is supported on alumina together with CZNP, which is the component (A).

Particularly, in Example 5 of the present invention, the performance improvement for HC is large, and therefore it is considered that the contribution to SR reactivity improvement by alumina is large. In addition, performance difference is confirmed when increasing CZNP concentration with respect to the fixed amount of Rh, and therefore it is inferred that in the powder preparation process including the mixed precursor formation stage for supporting Rh and CZNP on alumina, and uniformization treatment, the BET SA value of the matrix changes to contribute.

From the results of the EPMA evaluation test of the catalyst powders of the above Examples 1 to 4 and Comparative Examples 1 to 2 before and after rich/lean endurance heat treatment at 1,050°C for 12 hours, the catalyst structure can be estimated as follows.

First, before the heat treatment, in the catalysts of the present invention in which CZNP is supported in Examples 1 to 4, there is no change in the catalyst structure because they are not subjected to heating, and the same applies to Comparative Example 1 in which CZNP is not supported.

But, in the catalysts of the present invention in which CZNP is supported on alumina and placed in the upper layer as in Examples 5 to 8, the high dispersion of Rh on alumina is maintained by CZNP and the like present around it to suppress an increase in particle diameter after the heat treatment (endurance) at 1050°C. On the other hand, for the catalyst of Comparative Example 3 (CZNP content: 0 wt%) in which only Rh is supported without CZNP on alumina and which is placed in the upper layer, it is estimated that the particle diameter of most of Rh on alumina increases by the heat treatment (endurance) to greatly change the catalyst structure, and that this results in decrease in the performance.

### (Examples 9 to 12)

The honeycomb catalysts of Examples 9 to 12 were prepared in the same manner as in Example 5 except that in the above Example 5 in which 5 wt% Ce-Zr-Nd-Pr/Al₂O₃ was used, the component (A) and/or the component (B) in which any rare earth metal or zirconium of CZNP was not contained were used as <Rh and component (A) and/or component (B)-supporting alumina> instead of the catalyst of Example 1.

In other words, instead of CZNP, the oxide including three elements, Zr, Nd, and Pr, and lacking Ce (ZNP), the oxide including three elements, Ce, Nd, and Pr, and lacking Zr (CNP), the oxide including three elements, Ce, Zr, and Pr, and lacking Nd (CZP), and the oxide including three elements, Ce, Zr, and Nd, and lacking Pr (CZN) shown below were prepared, and using these, a model gas test was performed under the same conditions as the above.
(ZNP) zirconium nitrate in an amount of 2.9 wt% in terms of ZrO₂, neodymium nitrate in an amount of 0.35 wt% in terms of Nd₂O₃, and praseodymium nitrate in an amount of 0.35 wt% in terms of Pr₆O₁₁
(CNP) cerium nitrate in an amount of 1.4 wt% in terms of CeO₂, neodymium nitrate in an amount of 0.35 wt% in terms of NCl₂O₃, and praseodymium nitrate in an amount of 0.35 wt% in terms of Pr₆O₁₁
(CZP) cerium nitrate in an amount of 1.4 wt% in terms of CeO₂, zirconium nitrate in an amount of 2.9 wt% in terms of ZrO₂, and praseodymium nitrate in an amount of 0.35 wt% in terms of Pr₆O₁₁
(CZN) cerium nitrate in an amount of 1.4 wt% in terms of CeO₂, zirconium nitrate in an amount of 2.9 wt% in terms of ZrO₂, and neodymium nitrate in an amount of 0.35 wt% in terms of Nd₂O₃

The results of T50 are shown in the bar graph in Figure 7 for each of CO, HC, and NOx. The results of C400 conversion rates were generally the same as the results of T50 though in the case of the lack of Nd, a slight performance decrease compared with others was noted. For the catalytic effect of the component (A) or the component (B) obtained, the performance of the complex oxide lacking any element of CZNP decreases to some extent compared with the complex oxide including all of CZNP. Thus, it can be said that Rh supported on a complex oxide including all of CZNP, and supported on alumina is preferred.

But, these results are based on Example 5, in which 5 wt% Ce-Zr-Nd-Pr/Al₂O₃ is used, and it is considered that as long as any of rare earth metals such as Ce, and Zr is contained within the scope of the present invention, performance decrease is kept to a minimum even if a three element-based complex oxide in which a component such as Nd or Pr is lacking is used. In addition, these results are obtained when the total amount of the elements of the component (A) or the component (B) is as small as less than 5 wt% in terms of a complex oxide, and it is considered that when the amount of Ce and/or Zr is as large as 5 wt% or more, some degree of performance improvement is obtained even with a two element-based complex oxide though it depends on the types of elements. Therefore, it is considered that such complex oxides can be used without practical problems depending on the type of exhaust gas of interest, the engine operating condition, and the like.

### Industrial Applicability

The exhaust gas-purifying catalyst of the present invention can purify carbon monoxide (CO), hydrocarbons (HC), nitrogen oxides (NOx), and the like in exhaust gas discharged from an internal combustion engine or the like, and can maintain excellent performance particularly under a wide range of conditions from low temperature to high temperature. Therefore, the exhaust gas-purifying catalyst of the present invention can be widely and effectively used, for example, for automobile applications such as gasoline engines and diesel engines as well as mobile applications such as ships, and stationary applications such as electric generators. However, the present invention is not limited to these applications and can also be widely applied to denitration techniques for nitrogen oxides contained in exhaust gas from fixed sources such as boilers.

## Claims

1. An exhaust gas-purifying catalyst composition for purifying carbon monoxide (CO), hydrocarbons (HC), and/or nitrogen oxides (NOx) in exhaust gas, comprising:
at least Rh; a complex oxide that is the following Ce-containing component (A) and/or the following Zr-containing component (B); and alumina, wherein
Rh is supported on alumina together with the complex oxide, an amount of Rh supported is 0.01 to 5 wt% based on a total amount of Rh, the complex oxide, and alumina, and a total content of the complex oxide is 0.1 to 15 wt% in total based on the total amount of Rh, the complex oxide, and alumina,
component (A):
one or more selected from the group consisting of a Ce-Zr complex oxide, a Ce-Nd complex oxide, a Ce-Pr complex oxide, a Ce-La complex oxide, and a Ce-Y complex oxide; a Ce-Zr-Nd complex oxide, a Ce-Zr-Pr complex oxide, a Ce-Zr-La complex oxide, a Ce-Pr-La complex oxide, a Ce-Zr-Y complex oxide, a Ce-Nd-Pr complex oxide, a Ce-Nd-La complex oxide, a Ce-Nd-Y complex oxide, a Ce-Pr-Y complex oxide, and a Ce-La-Y complex oxide; a Ce-Zr-Nd-Pr complex oxide, a Ce-Zr-Nd-La complex oxide, a Ce-Nd-Pr-La complex oxide, a Ce-Zr-Pr-La complex oxide, a Ce-Zr-Nd-Y complex oxide, a Ce-Zr-Ln-Y complex oxide, a Ce-Zr-Pr-Y complex oxide, a Ce-Nd-Pr-Y complex oxide, and a Ce-Pr-La-Y complex oxide; and a Ce-Nd-Ln-Y complex oxide, a Ce-Zr-Nd-Pr-Y complex oxide, a Ce-Zr-Nd-Ln-Y complex oxide, a Ce-Zr-Pr-La-Y complex oxide, a Ce-Nd-Pr-La-Y complex oxide, and a Ce-Zr-Nd-Pr-Ln-Y complex oxide,
component (B):
one or more selected from the group consisting of a Zr-Nd complex oxide, a Zr-Pr complex oxide, and a Zr-Y complex oxide; a Zr-Nd-Pr complex oxide, a Zr-Nd-La complex oxide, a Zr-Pr-La complex oxide, a Zr-Nd-Y complex oxide, and a Zr-Pr-Y complex oxide; and a Zr-Nd-Pr-La complex oxide, a Zr-Nd-Pr-Y complex oxide, a Zr-Nd-La-Y complex oxide, a Zr-Pr-Ln-Y complex oxide, and a Zr-Nd-Pr-La-Y complex oxide.

2. The exhaust gas-purifying catalyst composition according to claim 1, wherein
Rh and the complex oxide are highly dispersed on alumina.

3. A method for producing the exhaust gas-purifying catalyst composition according to claim 1 or 2, comprising
dissolving at least a water-soluble Rh compound and water-soluble precursor compounds of the Ce-containing component (A) and/or the Zr-containing component (B) in water to form a mixed precursor of Rh and a Ce-containing compound and/or a Zr-containing compound,
bringing an aqueous solution containing the mixed precursor into contact with alumina to impregnate alumina with Rh and the precursor compound of the component (A) and/or the precursor compound of the component (B) to obtain a slurry, and
then filtering and drying the obtained slurry followed by firing to obtain a catalyst composition in which Rh is supported on alumina together with the complex oxide that is the component (A) and/or the component (B).

4. The method for producing the exhaust gas-purifying catalyst composition according to claim 3, wherein
the Rh compound and the precursor compound of the component (A) and/or the precursor compound of the component (B) are all acidic salt compounds, and the mixed precursor is formed while an acid is added.

5. The method for producing the exhaust gas-purifying catalyst composition according to claim 3, wherein
the Rh compound and the precursor compound of the component (A) and/or the precursor compound of the component (B) are all basic compounds, and the mixed precursor is formed while a base is added.

6. The method for producing the exhaust gas-purifying catalyst composition according to any one of claims 3 to 5, wherein
the slurry is dried by spray drying.

7. The method for producing the exhaust gas-purifying catalyst composition according to any one of claims 3 to 6, comprising
mixing an aqueous medium comprising a binder and an acid or a base with the catalyst composition in which Rh is supported on alumina together with the complex oxide that is the component (A) and/or the component (B), followed by grinding for slurrying.

8. An automobile exhaust gas-purifying catalyst comprising:
at least a honeycomb support; and a catalyst layer, wherein
the honeycomb support is coated with the exhaust gas-purifying catalyst composition according to claim 1 or 2 as the catalyst layer.

9. The automobile exhaust gas-purifying catalyst according to claim 8, wherein
the catalyst layer contains a catalyst composition in which Rh is supported on the complex oxide of the component (A) and/or the complex oxide of the component (B) .
